# EUROPÄISCHE PATENTSCHRIFT

(11) **EP 2 754 218 B1**
(45) Veröffentlichungstag und Bekanntmachung des Hinweises auf die Patenterteilung: **19.07.2017**
(21) Anmeldenummer: 12772945.7
(22) Anmeldetag: 15.10.2012
(51) Int. Cl.: H02H 3/087, H02H 3/093, H02H 7/08, H02H 3/10, H02H 3/44, H02H 7/26, H02H 9/00

(54) **VERBESSERUNG DES MOTORSCHUTZES EINES GLEICHSTROMANTRIEBS**
IMPROVEMENT OF THE MOTOR PROTECTION OF A DC DRIVE
AMÉLIORATION DE LA PROTECTION DU MOTEUR D'UN ENTRAÎNEMENT À COURANT CONTINU

(30) Priorität: 26.10.2011 DE 102011085253
(43) Veröffentlichungstag der Anmeldung: 16.07.2014
(73) Patentinhaber: Siemens Aktiengesellschaft, 80333 München (DE)
(72) Erfinder: AHLF, Gerd, 91369 Wiesenthau (DE); MÖRSCH, Michael, 91054 Erlangen (DE)
(86) Internationale Anmeldenummer: PCT/EP2012/070406
(87) Internationale Veröffentlichungsnummer: WO 2013/060591

(56) Entgegenhaltungen:
- WO-A2-2010/003835
- WO-A2-2010/089338
- JP-A- 3 098 480

## Beschreibung

Die Erfindung betrifft ein elektrisches Gleichstromnetz für Unter- und Überwasserfahrzeuge sowie für Offshore-Anlagen mit zumindest einer in einem jeweiligen Quellenstrang angeordneten Gleichstromquelle und zumindest einem in einem jeweiligen Motorstrang angeordneten Gleichstromantriebsmotor. Weiterhin betrifft die Erfindung ein Verfahren zum Beeinflussen eines in einem Gleichstromnetz fließenden Gleichstroms.

Gleichstromnetze bzw. Gleichstromanlagen sind beispielsweise in Unterwasserschiffen weit verbreitet. Insbesondere sind dort Summenkurzschlussströme von ca. 100 kA und mehr möglich, was im Kurzschlussfall in Folge hoher mechanischer Kräfte durch Stossströme zu einer erheblichen dynamischen und thermischen Belastung der gesamten Gleichstromanlage führt. Bei einem Kurzschluss im Propulsionsbetrieb geht dabei der Gleichstrommotor vom motorischen in den generatorischen Betrieb über. Kritisch wird es, wenn am Gleichstrommotor ein sogenanntes "Kommutatorrundfeuer" auftritt, was zu großen Schäden am Gleichstrommotor führen kann.

Aus der WO 2010/003835 A2, die den Oberbegriff des Anspruch 1 bildet, ist eine Schnellschalteinrichtung für eine Hochleistungs-Batterie in einem Gleichstrominselnetz bekannt, welche beispielsweise bei einem Unterwasserfahrzeug eingesetzt werden kann. Das Gleichstrominselnetz weist mehrere Batteriemodule, einen Gleichstromantriebsmotor und eine Überwachungs- und Steuereinrichtung auf.

Aus der JP 03 098480 A ist eine Schaltung zum Anlassen eines Gleichstrommotors bekannt, wobei dem Gleichstrommotor ein Schalter vorgeschaltet ist.

Der Erfindung liegt die Aufgabe zugrunde, im Fall eines Kurzschlusses in einem elektrischen Gleichstromnetz einen verbesserten Schutz des elektrischen Gleichstromnetzes zu gewährleisten.

Diese Aufgabe wird gelöst durch ein elektrisches Gleichstromnetz der eingangs genannten Art, wobei jeweils zumindest eine Strommesseinrichtung zur Erfassung eines Stroms und/oder Stromanstiegs an der zumindest einen Gleichstromquelle vorgesehen ist sowie zumindest eine Steuerung zur Beeinflussung eines in dem jeweiligen Motorstrang des Gleichstromnetzes fließenden Gleichstromes, falls der durch die zumindest eine Strommesseinrichtung erfasste Strom und/oder Stromanstieg größer als ein vorgebbarer Strom und/oder Stromanstieg ist, wobei im jeweiligen Motorstrang dem jeweiligen Gleichstromantriebsmotor zumindest ein Anlasswiderstand zur Reduzierung eines Anlassstromes vorgeschaltet ist, wobei der zumindest eine Anlasswiderstand mittels zumindest eines parallel zu ihm geschaltenen Leistungsschalters überbrückbar ist und wobei eine Wirkverbindung derart zwischen dem zumindest einen Leistungsschalter und der zumindest einen Steuerung besteht, dass der zumindest eine Anlasswiderstand mittels des zumindest einen Leistungsschalters zuschaltbar ist, falls der durch die zumindest eine Strommesseinrichtung erfasste Strom und/oder Stromanstieg größer als der vorgebbare Strom und/oder Stromanstieg ist.

Diese Aufgabe wird weiter gelöst durch ein Verfahren der eingangs genannten Art, wobei das Gleichstromnetz zumindest eine in einem jeweiligen Quellenstrang angeordnete Gleichstromquelle und zumindest einen in einem jeweiligen Motorstrang angeordneten Gleichstromantriebsmotor aufweist,
mit den folgenden Verfahrensschritten:
- Erfassen eines Stroms und/oder Stromanstiegs an der zumindest einen Gleichstromquelle mittels jeweils zumindest einer Strommesseinrichtung,
- Beeinflussen des im jeweiligen Motorstrang fließenden Gleichstroms, falls der durch die zumindest eine Strommesseinrichtung erfasste Strom und/oder Stromanstieg größer als ein vorgebbarer Strom und/oder Stromanstieg ist,
- Vorschalten zumindest eines Anlasswiderstands im jeweiligen Motorstrang vor den jeweiligen Gleichstromantriebsmotor zur Reduzierung eines Anlassstroms während des Anlassens des zumindest einen Gleichstromantriebsmotors,
- Überbrücken des zumindest einen Anlasswiderstands mittels eines parallel zu ihm geschalteten Leistungsschalters, sobald der zumindest eine Gleichstromantriebsmotor angelassen wurde und der durch die zumindest eine Strommesseinrichtung erfasste Strom und/oder Stromanstieg kleiner als der vorgebbare Strom und/oder Stromanstieg ist,
- Vorschalten des zumindest einen Anlasswiderstands vor den zumindest einen Gleichstromantriebsmotor, falls der durch die zumindest eine Strommesseinrichtung erfasste Strom und/oder Stromanstieg größer als der vorgebbare Strom und/oder Stromanstieg ist.

Im Propulsionsbetrieb geht der zumindest eine Gleichstromantriebsmotor bei Auftreten eines Kurzschlusses vom motorischen in den generatorischen Betrieb über, so dass sich die Stromrichtung umkehrt und aufgrund einer relativ hohen Zeitkonstante im Motorkreis der Kurzschlussstrom am zumindest einen Gleichstromantriebsmotor relativ langsam ansteigt. Dagegen steigt der Kurzschlussstrom an der zumindest einen Gleichstromquelle sehr viel schneller und erreicht schneller kritische Stromwerte. Durch die erfindungsgemäße Erfassung des Stroms und/oder Stromanstiegs an der zumindest einen Gleichstromquelle kann somit im Fall eines Kurzschlusses eine frühere Beeinflussung des im jeweiligen Motorstrang des Gleichstromnetzes fließenden Gleichstroms bewirkt werden, weil dort gemessen wird, wo am schnellsten kritische Ströme erreicht werden. Durch die schnellere Beeinfussung des jeweiligen Motorstrang des Gleichstromses wird daher der Schutz der Gleichstromanlage, insbesondere des zumindest einen Gleichstrommotors wesentlich verbessert. Dabei kann die Beeinflussung beispielsweise derart erfolgen, dass der im jeweiligen Motorstrang fließende Gleichstrom begrenzt oder abgeschaltet wird.

Durch die Messung des Stroms und/oder Stromanstiegs an der zumindest einen Gleichstromquelle wird die Erfassung eines kritischen Stroms und/oder Stromanstiegs zusätzlich verlässlicher als bei Messung am zumindest einen Gleichstrommotor, da im Betrieb des zumindest einen Gleichstrommotors dynamische Stromspitzen auftreten können. Bei der Festlegung einer Auslösereinstellung für den Fall eines Kurzschlusses spielen diese Stromspitzen somit eine kleinere Rolle. Somit kann der kritische Stromwert mit geringerer Sicherheitsreserve und damit auch kleiner gewählt werden.

Der Stromanstieg kann beispielsweise durch die zeitliche Ableitung des Stromes charakterisiert werden. Ist die zeitliche Ableitung des Stromes während einer bestimmten Zeit größer als der vorgebbare, als kritisch angesehene Wert, wird der Gleichstrom auf Veranlassung der Steuerung abgeschaltet, insbesondere durch Schalter oder Leistungsschalter. Als Kriterium für das Vorliegen eines Kurzschlusses und der folgenden Abschaltung des Gleichstromes kann alternativ zum Stromanstieg auch der Absolutwert des fließenden Gleichstroms verwendet werden. Möglich ist auch, einen kritischen Stromanstieg dadurch zu detektieren, dass ein bestimmter Absolutwert des Stromes erreicht wird und gleichzeitig eine bestimmte zeitliche Ableitung des Stromes vorliegt.

Die zumindest eine Gleichstromquelle kann beispielsweise als Batterieanlage ausgeführt sein. Ferner kann die zumindest eine Gleichstromquelle eine Brennstoffzellenanlage umfassen. Denkbar ist weiterhin der Einsatz eines Gleichstromgenerators bzw. mehrerer der zuvor genannten Anlagen und Generatoren.

Oft werden bei Gleichstromantrieben kurzzeitig Anlasswiderstände zur Reduzierung der Anlaufströme in die Motorkreise eingeschaltet. Nach erfolgtem Hochlauf werden im normalen Betrieb anschließend die Anlasswiderstände durch einen oder mehrere Leistungsschalter kurzgeschlossen. Durch das dynamische Abschalten des zumindest einen Leistungsschalters bei Erfassung eines Stroms und/oder Stromanstiegs, der größer als der vorgebbare Strom und/oder Stromanstieg ist, wird der zumindest eine Anlasswiderstand wieder in den Motorkreis einbezogen, was zu einer Reduzierung des vom Motor im generatorischen Betrieb erzeugten Kurzschlussstromanteils führt. Dies führt zu einem verbesserten Schutz des elektrischen Gleichstromnetzes, da im Kurzschlussfall geringere Stossströme auftreten, was zu einer verringerten dynamischen und thermischen Belastung des Gleichstromnetzes führt. Der zumindest eine Anlasswiderstand führt also auch im Kurzschlussfall zu einer Strombegrenzung und kann gleichzeitig die beispielsweise in Induktivitäten gespeicherte elektrische Energie sicher und kontrolliert abbauen.

Bei einer vorteilhaften Ausgestaltung des elektrischen Gleichstromnetzes ist der im jeweiligen Motorstrang des Gleichstromnetzes fließende Gleichstrom mittels zumindest eines ersten Schalters und/oder mittels zumindest eines zweiten Schalters abschaltbar.

Der bzw. die Schalter unterbrechen somit das Gleichstromnetz im jeweiligen Motorstrang. Durch diese Unterbrechung sind die elektrischen Potentiale des jeweiligen Pole der zumindest einen Gleichstromquelle und des zumindest einen Gleichstromantriebsmotors nicht mehr miteinander verbunden. Durch die vollständige Trennung der Potentiale der entsprechenden Pole der zumindest einen Gleichstromquelle und des zumindest einen Gleichstromantriebsmotors werden insbesondere mögliche Kriechströme vermieden oder stark verringert, insbesondere bei Wassereinbruch bei einem Wasserfahrzeug. Somit wird der Schutz des elektrischen Gleichstromnetzes im Kurzschlussfall durch die Trennung der Potentiale weiter verbessert.

Von Vorteil ist dabei insbesondere, den Gleichstromantriebsmotor komplett und möglichst frühzeitig von weiteren Gleichstromverbrauchern oder Gleichstromquellen zu trennen, so dass ein Kommutatorrundfeuer vermieden werden kann oder zumindest weniger stark auftritt. Dadurch dass der Stromanstieg an der Gleichstromquelle erfasst wird, also dort wo im Kurzschlussfall der Strom am schnellsten ansteigt, ist eine besonders frühe Trennung des Gleichstromantriebsmotors vom Gleichstromnetz möglich. Eine Erfassung eines Stromanstiegs am Gleichstromantriebsmotor würde zu einer wesentlich späteren Erkennung eines Kurzschlusses führen, so dass mögliche Kommutatorrundfeuer schwerwiegender ausfallen.

Um die Unterbrechung des jeweiligen Motorstranges möglichst rasch durchzuführen, können die Schalter beispielsweise derart dynamisch angesteuert werden, dass die Trennung anhand der Schalter durch die dynamische Ansteuerung schneller zu bewerkstelligen ist als in normalem Betrieb der Schalter.

Bei einer weiteren vorteilhaften Ausgestaltung des elektrischen Gleichstromnetzes umfasst die zumindest eine Gleichstromquelle zumindest eine Batterieanlage und zumindest einen Gleichstromgenerator, wobei mittels zumindest einer ersten Strommesseinrichtung ein erster Strom und/oder Stromanstieg an der zumindest einen Batterieanlage und mittels zumindest einer zweiten Strommesseinrichtung ein zweiter Strom und/oder Stromanstieg an dem zumindest einen Gleichstromgenerator erfassbar ist und wobei eine Wirkverbindung derart zwischen der zumindest einen ersten Strommesseinrichtung, der zumindest einen zweiten Strommesseinrichtung und der zumindest einen Steuerung besteht, dass der Gleichstrom beeinflussbar ist, falls der erfasste erste Strom und/oder Stromanstieg und/oder der erfasste zweite Strom und/oder Stromanstieg größer als der vorgebbare Strom und/oder Stromanstieg ist.

Der Einsatz von sowohl zumindest einer Batterieanlage als auch zumindest eines Gleichstromgenerators ist insbesondere bei Unterwasserfahrzeugen weit verbreitet. Der zumindest eine Gleichstromgenerator wird beispielsweise durch einen Dieselmotor angetrieben und stellt damit elektrische Energie bereit. Da der Dieselmotor abschaltbar und gleichzeitig der zumindest eine Gleichstromantriebsmotor weiterhin betreibbar sein muss, ist zumindest eine Batterieanlage vorgesehen, die elektrische Energie speichern kann. Wird der Dieselmotor ausgeschaltet, kann die zumindest eine Batterieanlage den zumindest einen Gleichstromantriebsmotor weiterhin mit Energie versorgen.

Durch die Erfassung des ersten Stroms und/oder Stromanstiegs und des zweiten Stroms und/oder Stromanstiegs kann eine besonders schnelle Beeinflussung, insbesondere Abschaltung, des Gleichstroms bewirkt werden, sobald beispielsweise lediglich einer der beiden erfassten Ströme und/oder Stromanstiege größer als der vorgebbare Strom und/oder Stromanstieg ist. Somit basiert die Erfassung eines Kurzschlusses auf der Erfassung eines Stroms und/oder Stromanstiegs an jener Komponente der Gleichstromquelle, welche am sensibelsten auf einen Kurzschluss reagiert. Alternativ kann der Gleichstrom beeinflusst werden, sobald beide erfasste Ströme und/oder Stromanstiege größer als der vorgebbare Strom und/oder Stromanstieg sind. Dadurch kann eine besonders zuverlässige Erkennung eines Kurzschlusses gewährleistet werden. Prinzipiell ist weiterhin denkbar, dass die zumindest eine Gleichstromquelle noch weitere Komponenten umfasst, wobei der jeweilige Strom und/oder Stromanstieg an den Komponenten der Gleichstromquelle mittels einer jeweiligen Strommesseinrichtung erfassbar ist und der Gleichstrom beeinflusst wird, sobald einer, mehrere oder alle der erfassten Ströme und/oder Stromanstiege größer als der vorgebbare Strom und/oder Stromanstieg sind.

Im Folgenden wird die Erfindung anhand der in den Figuren dargestellten Ausführungsbeispiele näher beschrieben und erläutert. Es zeigen:
- FIG 1: ein elektrisches Schaltbild einer Ausführungsform eines erfindungsgemäßen elektrischen Gleichstromnetzes und
- FIG 2: einen beispielhaften zeitlichen Verlauf eines Batteriestroms, eines Generatorstroms und eines Motorstroms.

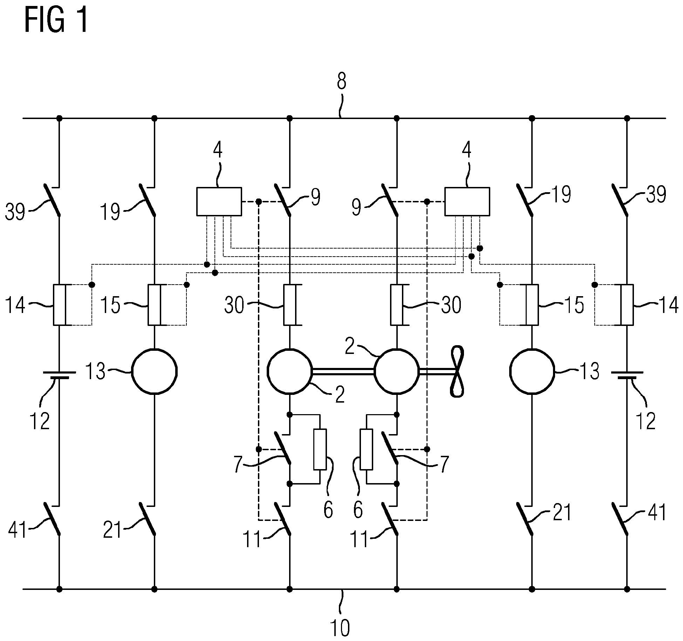

Figur 1 zeigt ein elektrisches Schaltbild einer Ausführungsform eines erfindungsgemäßen elektrischen Gleichstromnetzes. Gleichstromantriebsmotoren 2 sind über eine erste Verbindung 8 und eine zweite Verbindung 10 mit Batterieanlagen 12 und den Gleichstromgeneratoren 13 verbunden, sofern erste Schalter 9, 19, 39 und zweite Schalter 11, 21, 41 geschlossen sind. Innerhalb des jeweiligen Motorstranges ist ein Gleichstrom von der ersten Verbindung 8 zum jeweiligen Gleichstromantriebsmotor 2 mittels des jeweiligen ersten Schalters 9 unterbrechbar und ein Gleichstrom von der zweiten Verbindung 10 zum jeweiligen Gleichstromantriebsmotor 2 mittels des jeweiligen zweiten Schalters 11 unterbrechbar. Im Betrieb, d.h. wenn die zuvor genannten Schalter 9, 19, 39, 11, 21, 41 geschlossen sind, kann ein Gleichstrom von den Batterieanlagen 12 und den Gleichstromgeneratoren 13 zu den Gleichstromantriebsmotoren 2 fließen, wobei die erste Verbindung 8 als Stromschiene mit positiver Spannung und die zweite Verbindung 10 als Stromschiene mit negativer Spannung fungieren. Beim Anlassen der Gleichstromantriebsmotoren 2 sind Leistungsschalter 7 geöffnet, so dass der Gleichstrom über Anlasswiderstände 6 fließt und dadurch begrenzt wird. Im normalen Betrieb sind die Leistungsschalter 7 jedoch geschlossen, so dass die Anlasswiderstände 6 überbrückt sind.

Jeweils an den Batterieanlagen 12 auftretende Stromanstiege bzw. dort fließende Ströme werden über jeweilige erste Strommesseinrichtungen 14 erfasst. Jeweilige zweite Strommesseinrichtungen 15 erfassen jeweilige Stromanstiege an den Gleichstromgeneratoren 13 bzw. dort fließende Ströme. Die von den ersten Strommesseinrichtungen 14 und den zweiten Strommesseinrichtungen 15 ermittelten Stromanstiege bzw. Ströme werden an zumindest eine Steuerung 4 übermittelt, welche die übermittelten Daten mit einem vorgebbaren kritischen Stromanstieg bzw. einem vorgebbaren kritischen Strom vergleicht. Stellt die Steuerung 4 anhand dieses Vergleiches fest, dass ein Kurzschluss vorliegt, kann sie Steuersignale derart ausgeben, dass die ersten Schalter 9 und die zweiten Schalter 11 geöffnet werden, um den fließenden Gleichstrom direkt an den Gleichstromantriebsmotoren 2 zu unterbrechen. Durch die Erfassung der Stromanstiege anhand der ersten Strommesseinrichtungen 14 den Batterieanlagen 12 und anhand der zweiten Strommesseinrichtungen 15 an den Gleichstromgeneratoren 13 ist eine besonders schnelle Erfassung eines Kurzschlusses möglich, da dort die schnellsten Stromanstiege zu erwarten sind. Durch diese frühzeitige Kurzschlusserkennung können die Gleichstromantriebsmotoren 2 sehr schnell vom restlichen Gleichstromnetz getrennt werden und somit ein Kommutatorrundfeuer vermieden oder in seinen Auswirkungen zumindest beschränkt werden. Weiterhin kann die Steuerung 4 im Fall eines festgestellten Kurzschlusses Steuersignale an die Leistungsschalter 7 ausgeben, die dann geöffnet werden, um einen eventuell fließenden Gleichstrom mittels der Anlasslasswiderstände 6 zu begrenzen.

Im Fall eines Kurzschlusses kann zusätzlich vorgesehen werden, dass die Steuerung 4 auch Steuersignale an die weiteren ersten Schalter 19, 39 und die weiteren zweiten Schalter 21, 41 sendet, welche sich zwischen den Gleichstromgeneratoren 13 bzw. den Batterieanlagen 12 einerseits und der ersten Verbindung 8 bzw. der zweiten Verbindung 10 andererseits befinden. Somit wird der fließende Gleichstrom auch direkt an den Batterieanlagen 12 und den Gleichstromgeneratoren 13 unterbrochen. Dies kann auch, beispielsweise in Bezug auf die Batterieanlagen 12, später erfolgen als die Unterbrechung des Gleichstroms mittels der ersten Schalter 9, 11.

Obwohl direkt an den Gleichstromantriebsmotoren 2 vergleichsweise kleine Ströme und Stromanstiege im Fall eines Kurzschlusses zu erwarten sind, ist es weiterhin möglich, Stromanstiege bzw. Ströme auch dort mittels weiterer Strommesseinrichtungen 30 zu ermitteln. Die ermittelten Daten können dann ebenfalls an die Steuerung 4 übermittelt werden, welche diese Daten beim Feststellen eines Kurzschlusses ebenfalls berücksichtigen kann.

Selbstverständlich kann das elektrische Gleichstromnetz auch lediglich aus z.B. der rechten Hälfte des in Figur 1 dargestellten Ausführungsbeispiels bestehen und hätte somit nur einen Gleichstromantriebsmotor 2, einen Gleichstromgenerator 13 und nur eine Batterieanlage 12. Dabei ist es weiterhin möglich, lediglich nur einen Gleichstromgenerator 13 oder nur eine Batterieanlage 12 vorzusehen, ohne dass dabei Nachteile in Bezug auf einen verbesserten Überstromschutz gemäß der Erfindung entstehen.

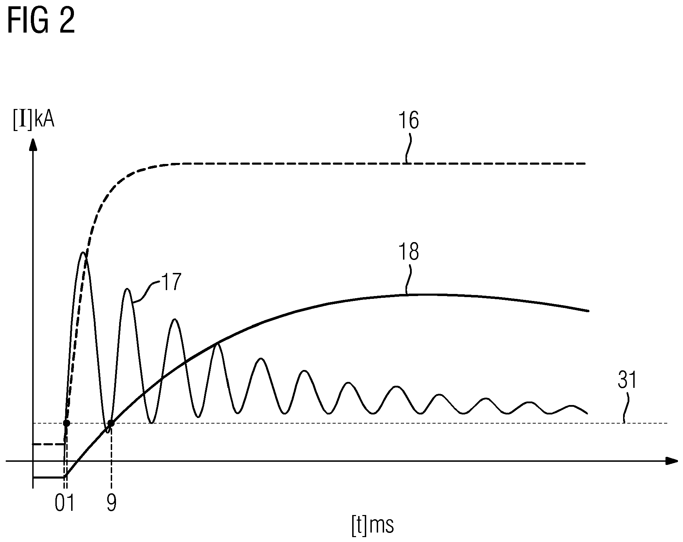

Figur 2 zeigt einen beispielhaften zeitlichen Verlauf eines Batteriestromes 16, eines Generatorstromes 17 und eines Motorstromes 18. Dabei ist auf der Abszisse die Zeit und auf der Ordinatenachse der Strom aufgetragen, wobei ein angenommener Kurzschluss zur Zeit t = 0 stattfindet. Um den Kurzschluss festzustellen, wird überwacht, ob der Batteriestrom 16 oder der Generatorstrom 17 größer als ein kritischer Strom 31 ist. Alternativ zu einem Absolutwert eines kritischen Stromes 31 kann dabei auch ein vorgebbarer Stromanstieg, beispielsweise in Form einer zeitlichen Ableitung des Stromes als Kriterium zur Feststellung eines Kurzschlusses dienen.

Im Fall eines Kurzschlusses im Propulsionsbetrieb geht der Motor vom motorischen in den generatorischen Betrieb über, d.h. der Motorstrom 18 wechselt zunächst seine Polarität und steigt danach mit der Zeit langsam an. Im Gegensatz dazu steigen der Batteriestrom 16 und der Generatorstrom 17 unmittelbar nach dem Kurzschluss schlagartig an. Dabei erreicht der Batteriestrom relativ schnell einen bestimmten Grenzwert, wohingegen der Generatorstrom eine Oszillation mit anfänglich großen Ausschlägen um einen relativ großen Grenzwert ausführt. Der kritische Strom 31 wird vom Batteriestrom 16 oder dem Generatorstrom 17 innerhalb sehr kurzer Zeit, im vorliegenden Beispiel innerhalb 1 ms, erreicht. Dagegen erreicht der Motorstrom 18 den kritischen Strom 31 sehr viel später, im vorliegenden Beispiel in 9 ms.

Folglich erlaubt die Überwachung des Batteriestroms 16 und des Generatorstroms 17 eine sehr schnelle Erkennung eines Kurzschlusses, insbesondere verglichen mit einer Überwachung des Motorstroms 18.

Zusammenfassend betrifft die Erfindung ein elektrisches Gleichstromnetz für Unter- und Überwasserfahrzeuge sowie für Offshore-Anlagen mit zumindest einer in einem jeweiligen Quellenstrang angeordneten Gleichstromquelle und zumindest einem in einem jeweiligen Motorstrang angeordneten Gleichstromantriebsmotor. Weiterhin betrifft die Erfindung ein Verfahren zum Beeinflussen eines in einem Gleichstromnetz fließenden Gleichstroms. Um im Fall eines Kurzschlusses in einem elektrischen Gleichstromnetz einen verbesserten Schutz zu gewährleisten, wird vorgeschlagen, jeweils zumindest eine Strommesseinrichtung zur Erfassung eines Stroms und/oder Stromanstiegs an der zumindest einen Gleichstromquelle und zumindest eine Steuerung zur Beeinflussung eines in dem jeweiligen Motorstrang des Gleichstromnetzes fließenden Gleichstromes, falls der durch die zumindest eine Strommesseinrichtung erfasste Strom und/oder Stromanstieg größer als ein vorgebbarer Strom und/oder Stromanstieg ist vorzusehen, wobei im jeweiligen Motorstrang dem jeweiligen Gleichstromantriebsmotor zumindest ein Anlasswiderstand zur Reduzierung eines Anlassstromes vorgeschaltet ist, wobei der zumindest eine Anlasswiderstand mittels zumindest eines parallel zu ihm geschalteten Leistungsschalters überbrückbar ist und wobei eine Wirkverbindung derart zwischen dem zumindest einen Leistungsschalter und der zumindest einen Steuerung besteht, dass der zumindest eine Anlasswiderstand mittels des zumindest einen Leistungsschalters zuschaltbar ist, falls der durch die zumindest eine Strommesseinrichtung erfasste Strom und/oder Stromanstieg größer als der vorgebbare Strom und/oder Stromanstieg ist.

## Patentansprüche

1. Elektrisches Gleichstromnetz für Unter- und Überwasserfahrzeuge sowie für Offshore-Anlagen mit
- zumindest einer in einem jeweiligen Quellenstrang angeordneten Gleichstromquelle (12, 13) und
- zumindest einem in einem jeweiligen Motorstrang angeordneten Gleichstromantriebsmotor (2),
wobei
- jeweils zumindest eine Strommesseinrichtung (14, 15) zur Erfassung eines Stroms und/oder Stromanstiegs an der zumindest einen Gleichstromquelle (12, 13) und
- zumindest eine Steuerung (4) zur Beeinflussung eines in dem jeweiligen Motorstrang des Gleichstromnetzes fließenden Gleichstromes, falls der durch die zumindest eine Strommesseinrichtung (14, 15) erfasste Strom und/oder Stromanstieg größer als ein vorgebbarer Strom und/oder Stromanstieg ist, vorgesehen sind,
**dadurch gekennzeichnet, dass**
- im jeweiligen Motorstrang dem jeweiligen Gleichstromantriebsmotor (2) zumindest ein Anlasswiderstand (6) zur Reduzierung eines Anlassstroms vorgeschaltet ist,
- wobei der zumindest eine Anlasswiderstand (6) mittels zumindest eines parallel zu ihm geschalteten Leistungsschalters (7) überbrückbar ist und
- wobei eine Wirkverbindung derart zwischen dem zumindest einen Leistungsschalter (7) und der zumindest einen Steuerung (4) besteht, dass der zumindest eine Anlasswiderstand (6) mittels des zumindest einen Leistungsschalters (7) zuschaltbar ist, falls der durch die zumindest eine Strommesseinrichtung (14, 15) erfasste Strom und/oder Stromanstieg größer als der vorgebbare Strom und/oder Stromanstieg ist.

2. Elektrisches Gleichstromnetz nach Anspruch 1,
- wobei der im jeweiligen Motorstrang des Gleichstromnetzes fließende Gleichstrom mittels zumindest eines ersten, in dem jeweiligen Motorstrang angeordneten Schalters (9) und/oder mittels zumindest eines zweiten, in dem jeweiligen Motorstrang angeordneten Schalters (11) abschaltbar ist.

3. Elektrisches Gleichstromnetz nach einem der vorhergehenden Ansprüche,
- wobei die zumindest eine Gleichstromquelle (12, 13) zumindest eine Batterieanlage (12) und zumindest einen Gleichstromgenerator (13) umfasst,
- wobei mittels zumindest einer ersten Strommesseinrichtung (14) ein erster Strom und/oder Stromanstieg an der zumindest einen Batterieanlage (12) und mittels zumindest einer zweiten Strommesseinrichtung (15) ein zweiter Strom und/oder Stromanstieg an dem zumindest einen Gleichstromgenerator (13) erfassbar ist, und
- wobei eine Wirkverbindung derart zwischen der zumindest einen ersten Strommesseinrichtung (14), der zumindest einen zweiten Strommesseinrichtung (15) und der zumindest einen Steuerung (4) besteht, dass der Gleichstrom beeinflussbar ist, falls der erfasste erste Strom und/oder Stromanstieg und/oder der erfasste zweite Strom und/oder Stromanstieg größer als der vorgebbare Strom und/oder Stromanstieg ist.

4. Verfahren zum Beeinflussen eines in einem Gleichstromnetz für Unter- und Überwasserfahrzeuge sowie für Offshore-Anlagen fließenden Gleichstroms, wobei das Gleichstromnetz zumindest eine in einem jeweiligen Quellenstrang angeordnete Gleichstromquelle (12, 13) und zumindest einen in einem jeweiligen Motorstrang angeordneten Gleichstromantriebsmotor (2) aufweist,
mit den folgenden Verfahrensschritten:
- Erfassen eines Stroms und/oder Stromanstiegs an der zumindest einen Gleichstromquelle (12, 13) mittels jeweils zumindest einer Strommesseinrichtung (14, 15),
- Beeinflussen des im jeweiligen Motorstrang fließenden Gleichstroms, falls der durch die zumindest eine Strommesseinrichtung (14, 15) erfasste Strom und/oder Stromanstieg größer als ein vorgebbarer Strom und/oder Stromanstieg ist,
- Vorschalten zumindest eines Anlasswiderstands (6) im jeweiligen Motorstrang vor den jeweiligen Gleichstromantriebsmotor (2) zur Reduzierung eines Anlassstroms während des Anlassens des zumindest einen Gleichstromantriebsmotors (2),
- Überbrücken des zumindest einen Anlasswiderstands (6) mittels eines parallel zu ihm geschalteten Leistungsschalters (7), sobald der zumindest eine Gleichstromantriebsmotor (2) angelassen wurde und der durch die zumindest eine Strommesseinrichtung (14, 15) erfasste Strom und/oder Stromanstieg kleiner als der vorgebbare Strom und/oder Stromanstieg ist,
- Vorschalten des zumindest einen Anlasswiderstands (6) vor den zumindest einen Gleichstromantriebsmotor (2), falls der durch die zumindest eine Strommesseinrichtung (14, 15) erfasste Strom und/oder Stromanstieg größer als der vorgebbare Strom und/oder Stromanstieg ist.

5. Verfahren nach der Anspruch 4 den folgenden weiteren Verfahrensschritten, falls der durch die zumindest eine Strommesseinrichtung (14, 15) erfasste Strom und/oder Stromanstieg größer als der vorgebbare Strom und/oder Stromanstieg ist:
- Abschalten des im jeweiligen Motorstrang des Gleichstromnetzes fließenden Gleichstromes mittels zumindest eines ersten, in dem jeweiligen Motorstrang angeordneten Schalters (9) und/oder mittels zumindest eines zweiten, in dem jeweiligen Motorstrang angeordneten Schalters (11).

6. Verfahren nach Ansprüche 4 oder 5 mit den folgenden weiteren Verfahrensschritten:
- Erfassen eines ersten Stroms und/oder Stromanstiegs an zumindest einer von der Gleichstromquelle (12, 13) umfassten Batterieanlage (12) mittels zumindest einer ersten Strommesseinrichtung (14),
- Erfassen eines zweiten Stroms und/oder Stromanstiegs an zumindest einem von der Gleichstromquelle (12, 13) umfassten Gleichstromgenerator (13) mittels zumindest einer zweiten Strommesseinrichtung (15),
- Beeinflussen des Gleichstroms, falls der erfasste erste Strom und/oder Stromanstieg und/oder der erfasste zweite Strom und/oder Stromanstieg größer als der vorgebbare Strom und/oder Stromanstieg ist.

## Claims

1. Electrical DC power supply system for submarine and surface vessels as well as for offshore installations, comprising
- at least one DC source (12, 13) arranged in a respective source phase, and
- at least one DC drive motor (2) arranged in a respective motor phase,
wherein
- at least one current-measuring device (14, 15) is provided in each case for the purpose of measuring a current and/or current rise at the at least one DC source (12, 13), and
- at least one controller (4) is provided for the purpose of influencing a direct current flowing in the respective motor phase of the DC power supply system if the current and/or current rise measured by the at least one current-measuring device (14, 15) are/is greater than a predefinable current and/or current rise,
- **characterised in that** at least one starting resistor (6) is connected upstream of the respective DC drive motor (2) in the respective motor phase for the purpose of reducing a starting current,
- wherein the at least one starting resistor (6) can be bridged by means of at least one circuit breaker (7) connected in parallel with it, and
- wherein an operative connection exists between the at least one circuit breaker (7) and the at least one controller (4) such that the at least one starting resistor (6) can be connected into the circuit by means of the at least one circuit breaker (7) if the current and/or current rise measured by the at least one current-measuring device (14, 15) are/is greater than the predefinable current and/or current rise.

2. Electrical DC power supply system according to claim 1,
- wherein the direct current flowing in the respective motor phase of the DC power supply system can be disconnected by means of at least one first switch (9) arranged in the respective motor phase and/or by means of at least one second switch (11) arranged in the respective motor phase.

3. Electrical DC power supply system according to one of the preceding claims,
- wherein the at least one DC source (12, 13) comprises at least one battery system (12) and at least one DC generator (13),
- wherein a first current and/or current rise at the at least one battery system (12) can be measured by means of at least one first current-measuring device (14) and a second current and/or current rise at the at least one DC generator (13) can be measured by means of at least one second current-measuring device (15), and
- wherein an operative connection exists between the at least one first current-measuring device (14), the at least one second current-measuring device (15) and the at least one controller (4) such that the direct current can be influenced if the measured first current and/or current rise and/or the measured second current and/or current rise are/is greater than the predefinable current and/or current rise.

4. Method for influencing a direct current flowing in a DC power supply system for submarine and surface vessels as well as for offshore installations, wherein the DC power supply system has at least one DC source (12, 13) arranged in a respective source phase and at least one DC drive motor (2) arranged in a respective motor phase,
said method comprising the following method steps:
- measuring a current and/or current rise at the at least one DC source (12, 13) by means of at least one current-measuring device (14, 15) in each case,
- influencing the direct current flowing in the respective motor phase if the current and/or current rise measured by the at least one current-measuring device (14, 15) are/is greater than a predefinable current and/or current rise,
- connecting at least one starting resistor (6) upstream of the respective DC drive motor (2) in the respective motor phase for the purpose of reducing a starting current during the starting of the at least one DC drive motor (2),
- bridging the at least one starting resistor (6) by means of a circuit breaker (7) connected in parallel with it as soon as the at least one DC drive motor (2) has been started and the current and/or current rise measured by means of the at least one current-measuring device (14, 15) are/is less than the predefinable current and/or current rise,
- connecting the at least one starting resistor (6) upstream of the at least one DC drive motor (2) if the current and/or current rise measured by means of the at least one current-measuring device (14, 15) are/is greater than the predefinable current and/or current rise.

5. Method according to claim 4, comprising the following additional method steps if the current and/or current rise measured by the at least one current-measuring device (14, 15) is greater than the predefinable current and/or current rise:
- disconnecting the direct current flowing in the respective motor phase of the DC power supply system by means of at least one first switch (9) arranged in the respective motor phase and/or by means of at least one second switch (11) arranged in the respective motor phase.

6. Method according to claims 4 or 5, comprising the following additional method steps:
- measuring a first current and/or current rise at at least one battery system (12) included in the DC source (12, 13) by means of at least one first current-measuring device (14),
- measuring a second current and/or current rise at at least one DC generator (13) included in the DC source (12, 13) by means of at least one second current-measuring device (15),
- influencing the direct current if the measured first current and/or current rise and/or the measured second current and/or current rise are/is greater than the predefinable current and/or current rise.

## Revendications

1. Réseau électrique à courant continu pour des véhicules sous l'eau et sur l'eau, ainsi que pour des installations offshore, comprenant :
- au moins une source (12, 13) de courant continu montée dans une branche de source et
- au moins un moteur (2) de propulsion à courant continu monté dans une branche de moteur,
dans lequel
- il est prévu respectivement au moins un dispositif (14, 15) de mesure du courant pour détecter un courant et/ou une augmentation du courant sur la au moins une source (12, 13) de courant continu et
- au moins une commande (4) pour influencer un courant continu passant dans la branche de moteur du réseau à courant continu, si le courant et/ou l'augmentation du courant détecté par le au moins un dispositif (14, 15) de mesure du courant est plus grand qu'un courant et/ou qu'une augmentation du courant pouvant être donné à l'avance,
**caractérisé en ce que**
- dans la branche de moteur est montée, en amont du moteur (2) d'entraînement à courant continu, au moins une résistance (6) de démarrage pour réduire un courant de démarrage,
- dans lequel la au moins une résistance (6) de démarrage peut être shuntée au moyen d'au moins un disjoncteur (7), qui lui est monté en parallèle et
- dans lequel il y a une liaison active entre le au moins un disjoncteur (7) et la au moins une commande (4), de manière à pouvoir connecter la au moins une résistance (6) de démarrage au moyen du au moins un disjoncteur (7), si le courant et/ou l'augmentation de courant détecté par le au moins un détecteur (14, 15) de mesure du courant est plus grand que le courant et/ou l'augmentation de courant donné à l'avance.

2. Réseau électrique à courant continu suivant la revendication 1,
- dans lequel le courant continu passant dans la branche de moteur du réseau à courant continu peut être interrompu au moyen d'un premier interrupteur (9) monté dans la branche de moteur et/ou au moyen d'un deuxième interrupteur (11) monté dans la branche de moteur

3. Réseau électrique à courant continu suivant l'une des revendications précédentes,
- dans lequel la au moins une source (12, 13) de courant continu comprend au moins un système (12) de batterie et au moins un générateur (13) de courant continu,
- dans lequel, au moyen d'au moins un premier dispositif (14) de mesure du courant, un premier courant et/ou une première augmentation du courant peut être détecté sur le au moins un système (12) de batterie et, au moyen d'au moins un deuxième dispositif (15) de mesure du courant, un deuxième courant et/ou une deuxième augmentation du courant peut être détecté sur le au moins un générateur (13) de courant continu et
- dans lequel il y a une liaison d'action entre le au moins un premier dispositif (14) de mesure du courant, le au moins un deuxième dispositif (15) de mesure du courant et la au moins une commande (4), de manière à pouvoir influencer le courant en continu, si le premier courant et/ou la première augmentation de courant détecté et/ou le deuxième courant et/ou la deuxième augmentation de courant détecté est plus grand que le courant et/ou l'augmentation de courant donné à l'avance.

4. Procédé pour influencer un courant continu passant dans un réseau à courant continu pour des véhicules sous l'eau et sur l'eau, ainsi que pour des installations offshore, dans lequel le réseau à courant continu a au moins une source (12, 13) de courant continu montée dans une branche de source et au moins un moteur (2) d'entraînement à courant continu monté dans une branche de moteur,
comprenant les stades de procédé suivant :
- on détecte un courant et/ou une augmentation du courant sur la au moins une source (12, 13) de courant continu au moyen d'au moins un dispositif (14, 15) de mesure du courant,
- on influence le courant continu passant dans la branche de moteur, si le courant et/ou l'augmentation de courant détecté par le au moins un dispositif (14, 15) de mesure du courant est plus grand qu'un courant et/ou une augmentation du courant pouvant être donné à l'avance,
- on monte en série au moins une résistance (6) de démarrage dans la branche de moteur respective avant le moteur (2) d'entraînement à courant continu pour réduire un courant de démarrage pendant le démarrage du au moins un moteur (2) d'entraînement à courant continu,
- on shunte la au moins une résistance (6) de démarrage au moyen d'un disjoncteur, qui lui est monté en parallèle, dès que le au moins un moteur (2) d'entraînement à courant continu a été démarré et dès que le courant et/ou l'augmentation de courant détecté par le au moins un dispositif (14, 15) de mesure du courant est plus petit que le courant et/ou l'augmentation du courant pouvant être donné à l'avance,
- on monte en série la au moins une résistance (6) de démarrage avant le au moins un moteur (2) d'entraînement à courant continu, si le courant et/ou l'augmentation de courant détecté par le au moins un dispositif (14, 15) de mesure du courant est plus grand que le courant et/ou l'augmentation de courant pouvant être donné à l'avance.

5. Procédé suivant la revendication 4, qui a les autres stades de procédé suivants, si le courant et/ou l'augmentation de courant détecté par le au moins un dispositif (14, 15) de mesure du courant est plus grand que le courant et/ou l'augmentation de courant pouvant être donné à l'avance :
- on interrompt le courant continu passant dans la branche de moteur du réseau à courant continu au moyen d'au moins un premier interrupteur (9) monté dans la branche de moteur et/ou au moyen d'un deuxième interrupteur (11) monté dans la branche de moteur.

6. Procédé suivant la revendication 4 ou 5 ayant les autres stades de procédé suivants :
- on détecte un premier courant et/ou une première augmentation de courant sur au moins un système (12) de batterie contenu dans la source (12, 13) de courant continu au moyen d'au moins un premier dispositif (14) de mesure du courant,
- on détecte un deuxième courant et/ou une deuxième augmentation de courant sur au moins un générateur (13) de courant continu contenu par la source (12, 13) de courant continu au moyen d'au moins un deuxième dispositif (15) de mesure du courant,
- on influence le courant continu, si le premier courant et/ou la première augmentation de courant et/ou le deuxième courant et/ou la deuxième augmentation de courant détectée est plus grand que le courant et/ou l'augmentation de courant pouvant être donné à l'avance.
